# EUROPEAN PATENT APPLICATION

(11) **EP 4 685 435 A1**
(43) Date of publication of application: **28.01.2026**
(21) Application number: 24908295.9
(22) Date of filing: 17.12.2024
(51) Int. Cl.: G01B 11/25, G01B 11/06, G01B 21/04, G01N 21/88, G01N 21/95, B23K 20/10

(54) **APPARATUS AND METHOD FOR INSPECTING STATE OF ULTRASONIC WELDING MACHINE**

(30) Priority: 20.12.2023 KR 20230186577
(71) Applicant: LG Energy Solution, Ltd., Seoul 07335 (KR)
(72) Inventor: PARK, Sungwoo, Daejeon 34122 (KR); KIM, Tae Young, Daejeon 34122 (KR)
(74) Representative: Goddar, Heinz J.
(86) International application number: PCT/KR2024/097040
(87) International publication number: WO 2025/136013

(57) **Abstract**

An apparatus for inspecting a state of an ultrasonic welding machine according to an embodiment of the present invention includes: a 3D scanner for scanning a horn in a welding rod of the ultrasonic welding machine and a knurl pattern positioned at an end of the horn to calculate data on a height of each knurl included in the knurl pattern; and a control unit for determining the state of the ultrasonic welding machine on the basis of height data of multiple knurls included in the knurl pattern output from the 3D scanner.

## Description

This application claims priority to and the benefit of Korean Patent Application No.10-2023-0186577 filed in the Korean Intellectual Property Office on December 20, 2023 the entire contents of which are incorporated herein by reference.

### [Technical Field]

The present invention relates to a condition inspection apparatus and method of an ultrasonic welder, and more particularly, to an apparatus and method for inspecting condition of an ultrasonic welder using a 3D scanner.

### [Background Art]

Secondary batteries, capable of recharging and reuse, may be used as an energy source for small devices such as mobile phones, tablet PCs and vacuum cleaners, and also used as an energy source for medium and large devices such as personal mobility, automobiles and an energy storage system (ESS) for smart grids.

As a type of secondary battery cell, cylindrical, prismatic, and pouch-type batteries are broadly known. In the case of cylindrical batteries, the battery specifications are increasing due to their recent application to electric vehicles, and the cell-to-pack structure is being applied. Cylindrical batteries may be manufactured by interposing a separator, which is an insulator, between the positive and negative electrodes, winding it to form a jelly roll-shaped electrode assembly, and inserting it into the battery housing (battery can).

Here, welding may be required for electrical connection between the battery can and the current collector plate. Laser welding, spot welding, or ultrasonic welding can be used as one of welding methods. Ultrasonic welding rods are used in the ultrasonic welding used in the secondary battery manufacturing process, and if the degree of wear of the welding rod becomes severe, it may affect the welding quality. Therefore, it is necessary to check the degree of wear of the ultrasonic welding rod and replace the welding rod according to the degree of wear.

Normally, in order to check the degree of wear of the welding rod, the welding rod horn is removed and measured using an offline measuring device. Thus, it is difficult to check the degree of wear of the welding rod in real time, and the operation of the related manufacturing equipment needs to be stopped for a relatively long time. Due to these problems, the probability of producing defective cells due to the use of defective welding rods may increase, and thus, the operating efficiency of the manufacturing equipment may also decrease.

### [Detailed Description of the Invention]

### [Technical Problem]

To obviate one or more problems of the related art, embodiments of the present disclosure provide an apparatus for inspecting condition of an ultrasonic welder using a 3D scanner.

To obviate one or more problems of the related art, embodiments of the present disclosure also provide a method for inspecting condition of an ultrasonic welder using a 3D scanner.

### [Technical Solution]

In order to achieve the objective of the present disclosure, an apparatus for inspecting condition of an ultrasonic welder may include a 3-dimensional (3D) scanner configured to scan a horn in a welding rod of the ultrasonic welder and a knurl pattern located at the end of the horn and to calculate data on a height of each knurl included in the knurl pattern and a controller configured to determine a condition of the ultrasonic welder based on height data of a plurality of knurls included in the knurl pattern output from the 3D scanner.

The 3D scanner may further be configured to measure a distance to the horn as a reference and calculate a height of each knurl using the distance to the horn as the reference.

The 3D scanner may further be configured to obtain scanned data by laser line, perform calibration, align the calibrated data based on the horn, and extract a plurality of knurl inspection areas included in the knurl pattern.

Meanwhile, the apparatus for inspecting condition of the ultrasonic welder may further include a first moving means for moving the welding rod or the apparatus for inspecting condition of ultrasonic welder. Here, the 3D scanner may acquire a plurality of image profiles for the knurl pattern by scanning the welding rod that is relatively moved by the first moving means.

The 3D scanner may include a scanner body which include a light-projecting unit configured to irradiate a laser beam and a light-receiving unit configured to receive light reflected from the horn and knurl pattern and incident on the scanner.

The 3D scanner may further include a reflector configured to be arranged at a predetermined angle with a predetermined distance from the scanner body and to reflect the laser beam irradiated from the light-projecting unit toward the horn and knurl pattern.

The controller may further be configured to determine a wear condition of the welding rod according to the height of the plurality of knurls, by determining that the condition of the welding rod is poor if a number of knurls whose heights are less than a predetermined threshold is greater than or equal to a predetermined number.

The apparatus for inspecting condition of the ultrasonic welder may further include a second moving means configured to move the welding rod or the apparatus for inspecting the condition of the ultrasonic welder so that the welding rod is positioned in a space between the 3D scanner body and the reflector according to control by the controller.

The ultrasonic welder may be used in an assembly process of a cylindrical battery manufacturing process.

According to another embodiment of the present disclosure, a method for inspecting condition of an ultrasonic welder using a 3-dimensional (3D) scanner may include scanning a horn in a welding rod of the ultrasonic welder and a knurl pattern located at the end of the horn; calculating data on a height of each knurl included in the knurl pattern; and determining a condition of the ultrasonic welder based on height data of a plurality of knurls included in the knurl pattern output from the 3D scanner.

The calculating data on a height of each knurl included in the knurl pattern may include measuring a distance to the horn as a reference and calculate a height of each knurl using the distance to the horn as the reference.

The scanning the horn and the knurl pattern located at the end of the horn may include acquire a plurality of image profiles for the knurl pattern by scanning the welding rod that is relatively moved by a first moving means which is configured to move the welding rod or the apparatus for inspecting condition of ultrasonic welder.

The scanning the horn and the knurl pattern located at the end of the horn may include obtaining scanned data by laser line and performing calibration; aligning the calibrated data based on the horn; and extracting a plurality of knurl inspection areas included in the knurl pattern.

The determining a condition of the ultrasonic welder may include determining a wear condition of the welding rod according to the height of the plurality of knurls, and the determining the wear condition of the welding rod according to the height of the plurality of knurls includes determining that the condition of the welding rod is poor if a number of knurls whose heights are less than a predetermined threshold is greater than or equal to a predetermined number.

The 3D scanner may include a scanner body which include a light-projecting unit configured to irradiate a laser beam and a light-receiving unit configured to receive light reflected from the horn and knurl pattern and incident on the scanner.

The 3D scanner may further include a reflector configured to be arranged at a predetermined angle with a predetermined distance from the scanner body and to reflect the laser beam irradiated from the light-projecting unit toward the horn and knurl pattern.

The method may further include moving, by a second moving means, the welding rod or a condition inspection apparatus of the ultrasonic welder so that the welding rod is positioned in a space between the 3D scanner body and the reflector according to control by the controller.

The ultrasonic welder may be used in an assembly process of a cylindrical battery manufacturing process.

### [Advantageous Effects]

According to embodiments of the above-described present invention, the condition of the welding rod horn can be checked without the need to remove the welding rod horn in order to check the degree of wear of the welding rod, thereby improving the operational efficiency of the manufacturing facility.

In addition, since the height of knurl pattern is measured using a 3D scanner, the level of wear of the knurl can be checked in real time. Accordingly, the time for replacement of the horn can be predicted through monitoring the degree of wear of the knurl, and welding defects due to the wear of the knurl can be prevented.

### [Brief Description of the Drawings]

FIG. 1 shows a side view of a welder condition inspection apparatus according to embodiments of the present invention.
FIG. 2 is a three-dimensional view of a welder condition inspection apparatus according to embodiments of the present invention.
FIG. 3a is a detailed drawing of a knurl pattern of a welding rod as an inspection target of an inspection apparatus according to embodiments of the present invention, FIG. 3b is a drawing showing the height of the knurl of the welding rod, and FIG. 3c is a drawing showing distance between a lower reference plane of a horn of the welding rod and the 3D scanner.
FIG. 4 is a operational flowchart of a condition inspection method of a welding rod according to embodiments of the present invention.
FIG. 5 is a detailed operational flowchart of the process of calculating the height of the knurl in the welding rod condition inspection method according to embodiments of the present invention.
FIG. 6a shows a process of calculating the height of a knurl according to embodiments of the present invention and the results of each detailed process and FIG. 6b is a graph showing the calculated result data.

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

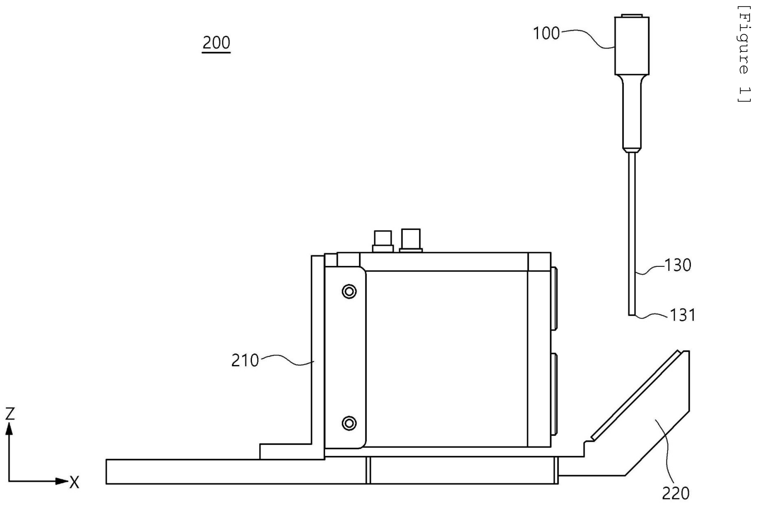

FIG. 1 shows a side view of a welder condition inspection apparatus according to embodiments of the present invention.

The welder condition inspection apparatus according to embodiments of the present invention may be a welder (welding rod) condition inspection apparatus that is configured to inspect an ultrasonic welder used in a battery manufacturing process, particularly in an assembly process during the battery manufacturing process. For example, an ultrasonic welder may be used to weld a joint between a positive current collector plate of a battery and a rivet terminal of a battery can.

The welder condition inspection apparatus 200 according to embodiments of the present invention may inspect a welding rod 100 of an ultrasonic welder located between a scanner body 210 and a reflector 220 of the inspection apparatus.

In general, ultrasonic welding is a method of applying ultrasonic waves to a target object through a conductive part, heating the target object with the vibration energy due to the ultrasonic waves, and then appropriately pressurizing the target object to weld it.

According to the embodiment illustrated in FIG. 1, the ultrasonic welding rod 100 may be configured to include a vibrator, a booster, a horn 130, etc., and may be connected to a controller (not shown) to perform welding under the control of the controller. Here, the controller may convert the frequency of the input commercial power into a high frequency which is equal to or higher than the ultrasonic range. In addition, the vibrator (converter) may convert electrical energy into mechanical energy and the booster may play a role in amplifying the amplitude.

The horn 130 in the welding rod 100 may resonate with the vibration of the vibrator and transmit vibration and load to a joint of the target object. Here, a knurl pattern 131 is formed on the end surface of the horn 130. Welding may be performed by applying ultrasonic waves to a welding part through the horn 130 and simultaneously applying pressure to the welding part using the knurl. During the battery assembly process, the ultrasonic welding rod 100 may move downward to a location of a part where welding is required in the battery being assembled and perform welding on the welding part.

The condition inspection apparatus 200 of an ultrasonic welder according to embodiments of the present invention may be configured to include a 3-dimensional (3D) scanner body 210 and a reflector 220 connected to one side of the scanner body.

In FIG. 1, the lower part of the reflector is connected to the lower part of the scanner body through a support plate, and a reflective surface of the reflector may be configured to be tilted to form a certain angle with the scanner body. The ultrasonic welding rod 100 may be placed in a space formed between the scanner body 210 and the reflector 220 for inspection.

Here, the ultrasonic welding rod 100 may be one of a plurality of ultrasonic welding rods that are attached to a rotating moving device and may be rotated. Here, a plurality of ultrasonic welding rods may be placed and operated to increase the efficiency of the welding process. Thus, among the plurality of ultrasonic welding rods, there may be at least one welding rod that is not performing welding and is in a resting state. Therefore, among the plurality of ultrasonic welding rods, one of the remaining ultrasonic welding rods excluding the ultrasonic welding rod which is actually performing welding may be an inspection target according to the present invention.

In addition, a condition inspection apparatus 200 of an ultrasonic welder may be moved, by a separate moving means, to a location where the ultrasonic welding rod 100 is located, so that the inspection can be performed. On the other hand, the location of the condition inspection apparatus 200 may be fixed and the ultrasonic welding rod 100 may be moved to a location where the condition inspection apparatus 200 is located, so that the inspection can be performed. In this case, a moving means configured to support the movement of the ultrasonic welding rod 100 may additionally be configured.

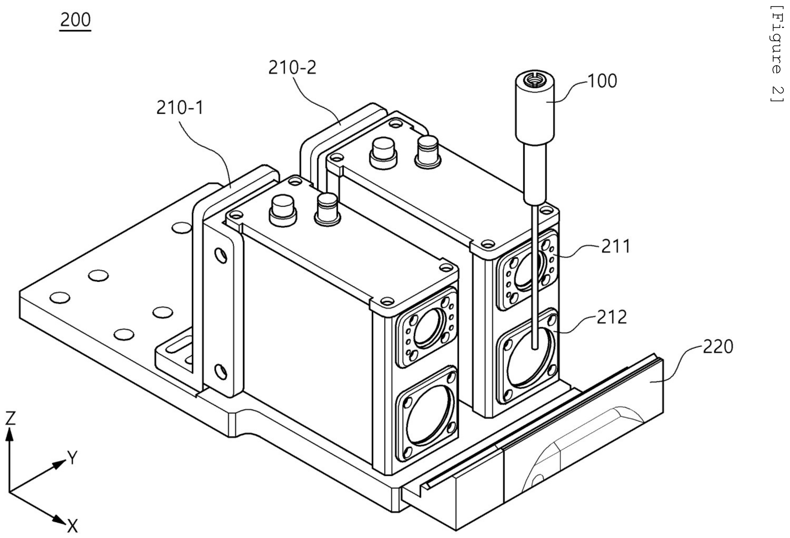

FIG. 2 is a three-dimensional view of a welder condition inspection apparatus according to embodiments of the present invention.

Referring to FIG. 2, an ultrasonic welder condition inspection apparatus 200 may be configured to include a 3D scanner body 210, a controller (not shown), and a reflector 220 connected at a certain angle to one side of the 3D scanner body.

The 3D scanner body 210 may be configured to include a first scanner 210-1 and a second scanner 210-2. The first scanner 210-1 and the second scanner 210-2 may perform the same operation, and a more accurate 3D scanning result can be obtained by synthesizing and judging the scanning results of each scanner. The scanner according to embodiments of the present invention may be a 3D scanner, and in particular, a laser scanner.

Non-contact scanners, commonly used in various fields, may be classified into active and passive scanners depending on whether the 3D scanner directly emits light to a subject. Active scanners are mainly used and only active scanners are sometimes limited to 3D scanners.

3D scanners mainly acquire surface information of an object and obtain even depth information (depth, z) of the object whereas cameras acquire only the two-dimensional information (x, y) on the surface of the object and color information thereof. The 3D scanner is configured to align multiple scanned images of a specific part to one coordinate system and merge into one data set, thereby resulting in forming a point cloud as a in which geometric information (mainly X, Y, Z) from the surface of the object is sampled.

In addition, the 3D scanner according to the embodiment of the present invention may be a laser scanner in particular. Laser scanners may be classified into various types of laser scanners according to the basic scanning method and measurement method. In an embodiment of the present invention, for example, a 3D laser scanner using optical triangulation among laser scanners may be used.

In the case of the optical triangulation method, the laser beam is irradiated to a measurement target, and the height/depth of the measurement target is measured using an imaging position of the light which is reflected from the measurement target and incident on a light-receiving unit.

Referring to FIG. 2, each of the first scanner 210-1 and the second scanner 210-2 includes a light-projecting unit 211 and a light-receiving unit 212, and the distance and angle between the light-projecting unit 211 and the light-receiving unit 212 may be fixed. The light-projecting unit 211 may irradiate a laser beam and the light-receiving unit 212 may receive the light which is reflected and incident. The inspection apparatus 200 may obtain difference in depth according to a relative position of a charge coupled device (CCD) element of the light-receiving unit where the light is received. According to an embodiment of the present invention, a line-type laser may be used to increase scanning speed.

In addition, according to embodiments of the present invention, scanning of a knurl located at the end of a welding rod may be performed while the welder condition inspection apparatus is moving or while the welding rod is moving. Therefore, the welding rod condition inspection apparatus according to embodiments of the present invention may include a moving means for moving the welder condition inspection apparatus or the welding rod.

Meanwhile, the light projected through the light-projecting unit 211 may be reflected by the reflector 220 that is arranged at a certain angle and at a certain distance from the first scanner 210-1 and the second scanner 210-2, and thus, a laser line may be projected on the measurement target. The light reflected from the measurement target may be incident on the light-receiving unit 212. Here, the reflector 220 may be, for example, a mirror, which reflects the light irradiated from the light-projecting unit 211, and thus, the light reflected by the reflector may be input to the light-receiving unit 212.

In addition, multiple image profiles for the knurl of the welding rod can be collected since the relative position between the welding rod, which is the measurement target, and the laser line may be moved by the first moving means.

Meanwhile, the ultrasonic welder condition inspection apparatus 200 according to embodiments of the present invention may include a controller (not shown) therein or may be linked with a separate controller. The controller may determine the condition of the ultrasonic welder based on height data of multiple knurls included in the knurl pattern output from the 3D scanner.

More specifically, the controller may determine a wear condition of the welding rod according to the height of the knurl, and the condition of the welding rod may be determined to be poor if a number of knurls whose heights are less than a predetermined threshold is greater than or equal to a predetermined number. In addition, the controller may calculate an average, a minimum, or a maximum value of height values of the multiple knurls, and the state of the corresponding welding rod may be determined to be poor if each of the average, the minimum, and the maximum values of the height values is less than a predetermined threshold.

Here, the controller may include a processor, a central processing unit (CPU), a graphics processing unit (GPU), or a dedicated processor on which methods according to embodiments of the present invention are performed.

In addition, the welder condition inspection apparatus 200 according to embodiments of the present invention may further include a first moving means (not shown) for moving the welding rod or the welder condition inspection apparatus. Accordingly, the 3D scanner may obtain a plurality of image profiles for the knurl pattern by scanning the welding rod that is relatively moved by the first moving means.

The welder condition inspection apparatus 200 according to the embodiment of the present invention may further include a second moving means (not shown) configured to move the welding rod or the welder condition inspection apparatus so that the welding rod is positioned in a space between the 3D scanner main body and the reflector according to the control of the controller.

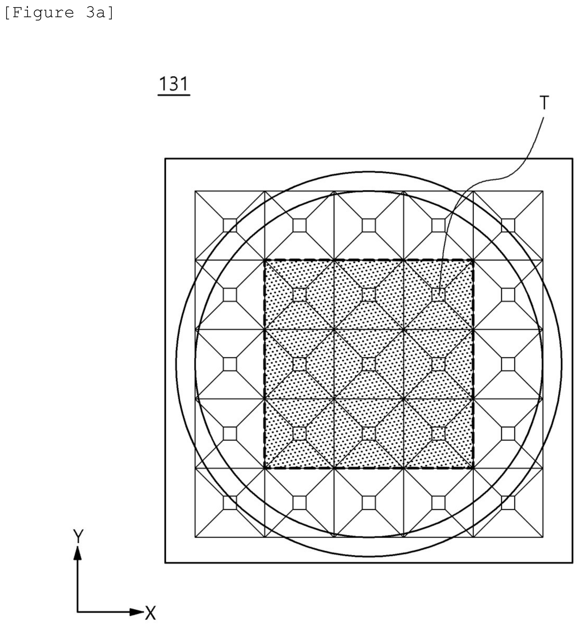

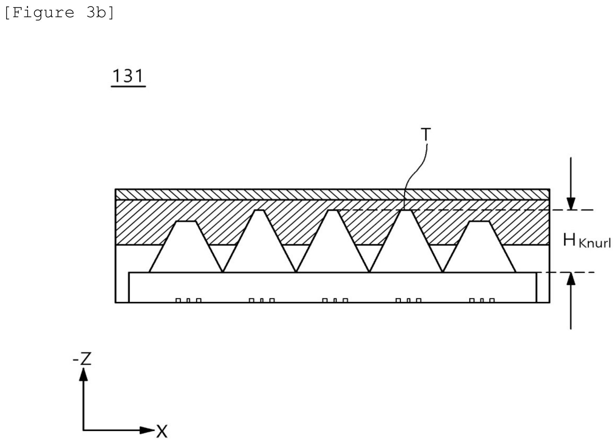

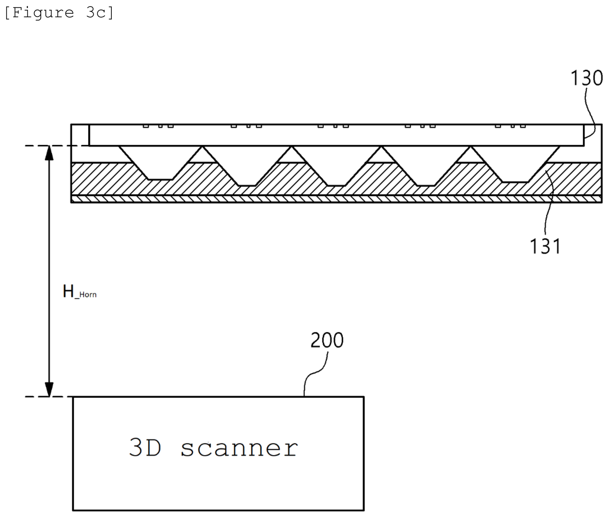

FIG. 3a is a detailed drawing of a knurl pattern of a welding rod as an inspection target of an inspection apparatus according to embodiments of the present invention, FIG. 3b is a drawing showing the height of the knurl of the welding rod, and FIG. 3c is a drawing showing distance between a lower reference plane of a horn of the welding rod and the 3D scanner.

The knurl pattern 131 may be fixedly attached to the end of the body of the horn 130 and is a means for directly contacting a welding part during ultrasonic welding to pressurize the welding part and apply ultrasonic vibration. Referring to FIGS. 3a and 3b, the knurl pattern 131 may include a plurality of knurl regions and each knurl region may have a pyramidal shape. The vertex of each knurl region of the pyramidal shape may have a partially cut shape and the height of each knurl region may be measured differently depending on the degree of wear.

Referring to FIG. 3b, the knurl height H_{_Knurl} may mean a height of the vertex (T) based on the bottom plane of the pyramidal knurl. Thus, it is necessary to measure the height of the bottom plane of the knurl, as a reference, in order to calculate the height of the knurl, wherein the bottom plane of the knurl is the bottom reference plane of the horn.

Referring to FIG. 3c, the height of the horn H_{_Horn} may be measured as the distance from the 3D scanner, which is an inspection apparatus according to embodiments of the present invention, to the end of the welding rod horn. Therefore, the height of the knurl may be calculated by measuring the distance from the scanner to the end of the welding rod horn and the distance from the scanner to the vertex of each knurl and calculating difference between these distances.

Meanwhile, regardless of the fact that the height of the horn is used to calculate the height of the knurl, if the height of the horn gradually decreases or gradually increases, there is a possibility that an abnormality has occurred in the welding rod or at least one device related to the welding rod. Therefore, if an abnormality has occurred in the calculated height of the welding rod horn, the inspection apparatus according to embodiments of the present invention may report the matter to a manager.

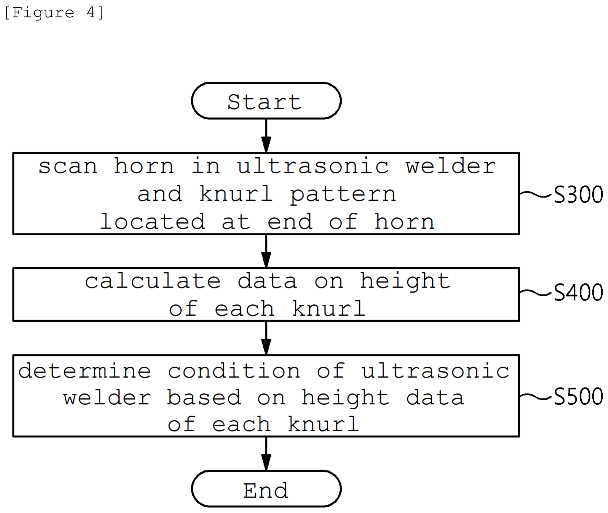

FIG. 4 is an operational flowchart of a condition inspection method of a welding rod according to embodiments of the present invention.

The condition inspection method of a welding rod illustrated in FIG. 4 is a method of inspecting the condition of an ultrasonic welder using a 3D scanner, and may be performed by the welder condition inspection apparatus described above, particularly the 3D scanner and the controller.

The 3D scanner may scan a horn in a welding rod of an ultrasonic welder and knurl pattern located at the end of the horn (S300). More specifically, the 3D scanner may obtain scanned data for each laser line, perform calibration, and align the calibrated data based on the horn to extract a plurality of knurl inspection areas included in the knurl pattern.

In addition, the 3D scanner may acquire a plurality of image profiles for the knurl pattern by scanning the welding rod that moves relatively by a first moving means configured to move the welding rod or the welder condition inspection apparatus.

Subsequently, the 3D scanner may calculate data on the height of each knurl included in the acquired knurl pattern (S400). Here, the distance to the horn may be measured as a reference and the height of each knurl may be calculated using the measured distance to the horn as the reference.

The controller may determine the condition of the ultrasonic welder based on the height data of a plurality of knurls included in the knurl pattern provided from the 3D scanner (S500). More specifically, according to one embodiment of the present invention, the controller may determine the wear condition of the welding rod according to the height of the knurl, and determine that the condition of the welding rod to be poor if the number of knurls whose heights are less than a predetermined threshold is greater than or equal to a predetermined number. Meanwhile, according to another embodiment of the present invention, the controller may calculate the average, minimum, or maximum value of the height values of multiple knurls, and determine that the state of the corresponding welding rod to be poor if each of the average, minimum, or maximum value of the height values is less than a predetermined threshold.

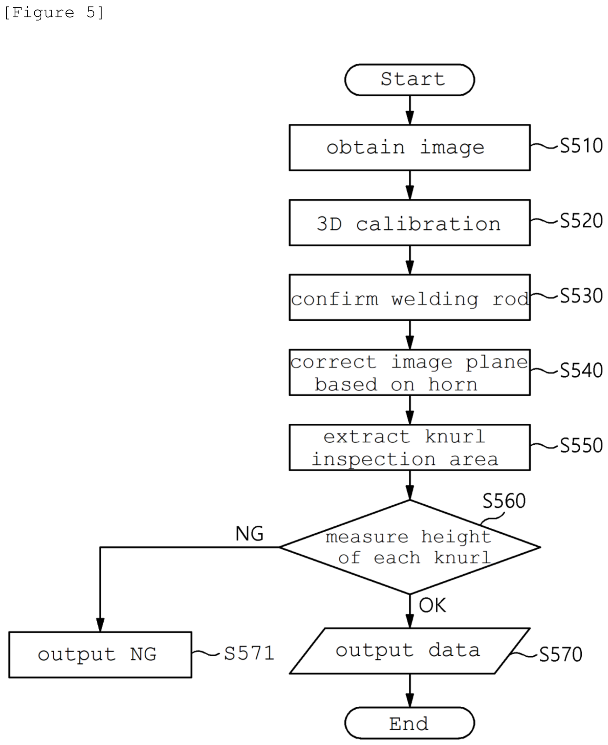

FIG. 5 is a detailed operational flowchart of the process of calculating the height of the knurl in the welding rod condition inspection method according to embodiments of the present invention.

The welding rod condition inspection method according to the present invention may be performed by the welder condition inspection apparatus described above, particularly, the 3D scanner.

Referring to FIG. 5, the 3D scanner may acquire image data for each laser line when the welding rod passes through scanner work space via a moving means (e.g., a conveyor or a rotary) (S510). Subsequently, 3D calibration may be performed on the acquired data (S520).

Here, the calibration may refer to a process of converting measured coordinates into actual coordinates or into coordinates on a coordinate system suitable for each purpose and calibration parameters may be determined according to internal state and installation form of a scanner head. Meanwhile, the calibration may be performed using a calibration jig as a preliminary task performed before the first operation of the 3D scanner. In addition, if a change occurs in a reference position and state during the operation of the ultrasonic welder, the 3D scanner may re-perform calibration.

When the welding rod is confirmed in the data for which calibration is completed (S530), the data may be aligned based on the horn of the welding rod. In other words, the image plane is corrected based on the horn (S540). Each knurl area may be extracted from the aligned data (S550). When the height of the knurl is measured in each extracted knurl area (S560), the corresponding data may be output (S570). Here, the output data is provided to the controller of the inspection apparatus, and the controller may check and analyze the data on knurl height and provide the analyzed information to a facility operator or manager. When the knurl height is below a predetermined threshold, the controller may determine that the degree of wear of the knurl is serious and may output a warning, notification signal, or message.

Meanwhile, when a problem occurs during the measurement process and the knurl height is not properly measured, the controller may notify that a measurement error has occurred (S571).

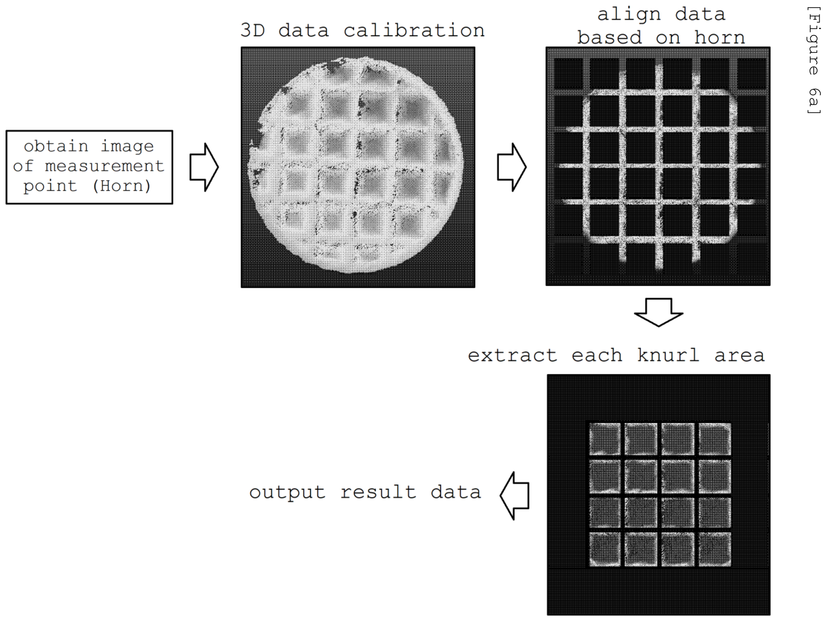

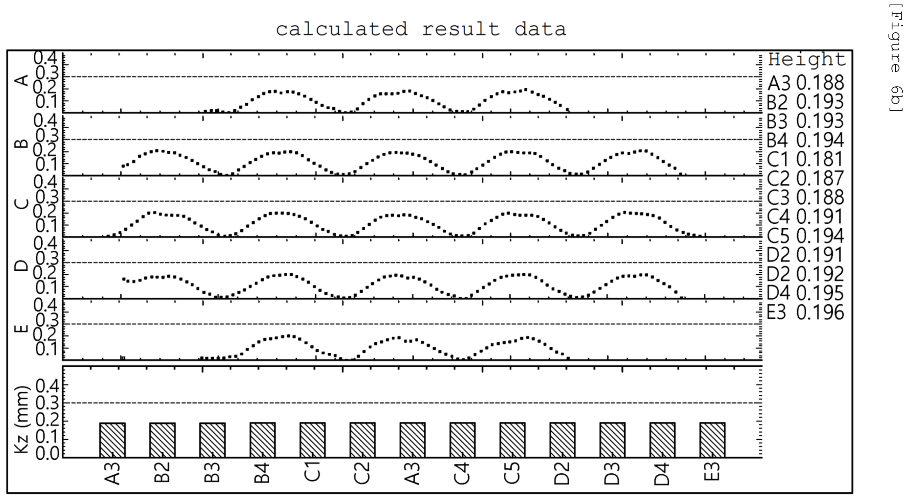

FIG. 6a shows a process of calculating the height of a knurl according to embodiments of the present invention and the results of each detailed process and FIG. 6b is a graph showing the calculated result data.

Referring to FIG. 6a, when a 3D image profile for a horn, which is a measuring point in a welding rod, is acquired by a 3D scanner, calibration is performed on the acquired 3D data. Afterwards, when the plane is corrected based on the horn, each knurl area in the knurl pattern may clearly presented. Afterwards, each knurl area may be extracted and the knurl height value for each knurl area may be calculated as the result data.

In the result data graph of FIG. 6b, A, B, C, D, and E are lines of each knurl, which are used together with numbers to represent each knurl area. The height values of each knurl (knurl height values in A3, B2, B3, B4, C1, C2, C3, C4, C5, D2, D3, D4, and E3) may be confirmed through the bar graph at the bottom of the graph in Fig. 6b and the height values displayed on the right.

According to embodiments of the present invention described above, the condition of the welding rod horn can be checked without the need to remove the welding rod horn in order to check the degree of wear of the welding rod, thereby improving the operational efficiency of the manufacturing facility.

In addition, since the height of knurl pattern is measured using a 3D scanner, the level of wear of the knurl can be checked in real time. Accordingly, the time for replacement of the horn can be predicted through monitoring the degree of wear of the knurl, and welding defects due to the wear of the knurl can be prevented.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An apparatus for inspecting condition of an ultrasonic welder, the apparatus comprising:
a 3-dimensional (3D) scanner configured to scan a horn in a welding rod of the ultrasonic welder and a knurl pattern located at the end of the horn and to calculate data on a height of each knurl included in the knurl pattern; and
a controller configured to determine a condition of the ultrasonic welder based on height data of a plurality of knurls included in the knurl pattern output from the 3D scanner.

2. The apparatus of claim 1, wherein the 3D scanner is further configured to measure a distance to the horn as a reference and calculate a height of each knurl using the distance to the horn as the reference.

3. The apparatus of claim 1, wherein the 3D scanner is further configured to obtain scanned data laser line by laser line, perform calibration, align the calibrated data based on the horn, and extract a plurality of knurl inspection areas included in the knurl pattern.

4. The apparatus of claim 1, further comprising a first moving means for moving the welding rod or the apparatus for inspecting condition of ultrasonic welder,
wherein the 3D scanner is further configured to acquire a plurality of image profiles for the knurl pattern by scanning the welding rod that is relatively moved by the first moving means.

5. The apparatus of claim 1, wherein the 3D scanner includes a scanner body,
wherein the scanner body includes:
a light-projecting unit configured to irradiate a laser beam; and
a light-receiving unit configured to receive light reflected from the horn and knurl pattern and incident on the scanner.

6. The apparatus of claim 5, wherein the 3D scanner further includes:
a reflector configured to be arranged at a predetermined angle with a predetermined distance from the scanner body and to reflect the laser beam irradiated from the light-projecting unit toward the horn and knurl pattern.

7. The apparatus of claim 1, wherein the controller is further configured to:
determine a wear condition of the welding rod according to the height of the plurality of knurls, by determining that the condition of the welding rod is poor if a number of knurls whose heights are less than a predetermined threshold is greater than or equal to a predetermined number.

8. The apparatus of claim 6, further comprising:
a second moving means configured to move the welding rod or the apparatus for inspecting the condition of the ultrasonic welder so that the welding rod is positioned in a space between the 3D scanner body and the reflector according to control by the controller.

9. The apparatus of claim 1, wherein the ultrasonic welder is used in an assembly process of a cylindrical battery manufacturing process.

10. A method for inspecting condition of an ultrasonic welder using a 3-dimensional (3D) scanner, the method comprising:
scanning a horn in a welding rod of the ultrasonic welder and a knurl pattern located at the end of the horn;
calculating data on a height of each knurl included in the knurl pattern; and
determining a condition of the ultrasonic welder based on height data of a plurality of knurls included in the knurl pattern output from the 3D scanner.

11. The method of claim 10, wherein the calculating data on a height of each knurl included in the knurl pattern includes:
measuring a distance to the horn as a reference and calculate a height of each knurl using the distance to the horn as the reference.

12. The method of claim 10, wherein the scanning the horn and the knurl pattern located at the end of the horn includes:
acquire a plurality of image profiles for the knurl pattern by scanning the welding rod that is relatively moved by a first moving means which is configured to move the welding rod or the apparatus for inspecting condition of ultrasonic welder.

13. The method of claim 10, wherein the scanning the horn and the knurl pattern located at the end of the horn includes:
obtaining scanned data laser line by laser line and performing calibration;
aligning the calibrated data based on the horn; and
extracting a plurality of knurl inspection areas included in the knurl pattern.

14. The method of claim 10, wherein the determining a condition of the ultrasonic welder includes:
determining a wear condition of the welding rod according to the height of the plurality of knurls, and
the determining the wear condition of the welding rod according to the height of the plurality of knurls includes determining that the condition of the welding rod is poor if a number of knurls whose heights are less than a predetermined threshold is greater than or equal to a predetermined number.

15. The method of claim 10, wherein the 3D scanner includes a scanner body,
wherein the scanner body includes:
a light-projecting unit configured to irradiate a laser beam; and
a light-receiving unit configured to receive light reflected from the horn and knurl pattern and incident on the scanner.

16. The method of claim 15, wherein the 3D scanner further includes:
a reflector configured to be arranged at a predetermined angle with a predetermined distance from the scanner body and to reflect the laser beam irradiated from the light-projecting unit toward the horn and knurl pattern.

17. The method of claim 16, further comprising:
moving, by a second moving means, the welding rod or a condition inspection apparatus of the ultrasonic welder so that the welding rod is positioned in a space between the 3D scanner body and the reflector according to control by the controller.

18. The method of claim 10, wherein the ultrasonic welder is used in an assembly process of a cylindrical battery manufacturing process.
